# EUROPEAN PATENT APPLICATION

(11) **EP 0 877 135 A2**
(43) Date of publication of application: **11.11.1998**
(21) Application number: 98303568.4
(22) Date of filing: 07.05.1998
(51) Int. Cl.: E05B 49/00, H02J 7/00

(54) **Electronic combination lock with capacitor charging circuit**

(30) Priority: 07.05.1997 US 852859
(71) Applicant: MAS-HAMILTON GROUP, Lexington, Kentucky 40511 (US)
(72) Inventor: Hill, James D., Lexington, Kentucky 40515 (US)
(74) Representative: Price, Anthony Stuart

(57) **Abstract**

A charging circuit, for use in electronic devices such as a self-powered electronic lock wherein the power is provided to the electronic controls (40) of the lock by a manually manipulated generator (10), includes a pair of zener diodes (26,28) connected in series, with one of the zener diodes (26) bridging between the voltage outputs of two separate generating phases (22,24) of the generator (10) and the second diode (28) connected in series with the first diode (26) bridging between one of the voltage outputs (24) and ground. The placement of the zener diodes (26,28) in series will limit the charging of one capacitor (30) to a first low voltage (6V) and a second capacitor (36) to a higher voltage (12V), the voltages respectively controlled by the first zener diode (26) and the second higher voltage (12V) being the sum of the two zener diode ratings. The beneficial effects flowing from such a network: 1) the ability to charge two capacitors (30,36) to differing voltage levels from a single generator (10) providing an output voltage from each of two different phases of the generator; and 2) substantially shortening the charging time and the amount of generator operation required to bring the larger of the two capacitors (30) to its full charge by combining the output of both phases (22,24) of the generator (10) to charge the capacitor (30) with the larger capacitance when the capacitor (36) having the smaller capacitance has been charged to a voltage level above that of the capacitor (30) with the larger capacitance.

## Description

Co-pending European Patent Application entitled "Solenoid Controlled Bolt Control For An Electronic Lock" filed by Mas-Hamilton Group on the same date as the present application and based on USSN 08/852,854 is a related application.

This invention relates to electronic combination locks and more specifically to a capacitor charging circuit for use in a self-powered electronic combination lock.

Electronic combination locks which are self-powered have been known for some time, and more recently, electronic self-powered combination locks have been disclosed and patented by James C. Miller, et.al., in United States Patent 5,061,923. A successful self-powered, high-security electronic lock has been marketed since 1992, by Mas-Hamilton Group, of Lexington, Kentucky. The lock is marketed by Mas-Hamilton Group and designated the X-07 lock. The Mas-Hamilton X-07 electronic combination lock derives its operating power from a generator which is manually driven by rotating the dial of the combination lock to operate the generator, thereby, creating electrical power for the lock operation. The electrical power generated by the generator thereafter is converted and conditioned from an alternating current electrical source to a direct current voltage and that is, in turn, applied through appropriate circuitry to a capacitor. As the capacitor is charged, the lock electronics are powered and brought up to operation in response to the availability of the power stored in the capacitor.

The Mas-Hamilton Group X-07 lock utilizes a large capacitance capacitor, the charge from which is further utilized to power both the electronics and the stepper motor, which upon command is used from the micro-processor in the electronics to align mechanical parts in a drive train to open the lock. Both the electronics and the stepper motor are designed and sized to consume minimum electrical power for each of their operations. Self-powered locks require that the available electrical energy be very wisely and conservatively allocated because, generally speaking, there is a lack of excess electrical power available. Accordingly, many electrical components are essentially unavailable for selection and use in self-powered locks because the available electrical power is insufficient to reliably operate these electrical devices. A solenoid is one example of such an electrical device that consumes too much electrical energy to be selected as a component of prior art self-powered locks. However, if a solenoid is the most desirable mechanism for activating a portion of the lock apparatus, it then becomes necessary to supply adequate electrical energy to the solenoid to ensure reliable operation.

A typical solenoid used to control the unlocking of the lock would consume virtually all of the available electrical power stored in the typical power supply capacitor and, thus, the available power would be bled to a level at which the electronic controls would cease to operate reliably during the operation of the lock and bolt. This condition is highly unacceptable because once the voltage is bled below the operating voltage of the electronics and particularly below the operating voltage of the micro-processor used to control the electronics, the reliability of the micro-processor operation is compromised or eliminated. Because the micro-processor may be in the middle of an operation whenever the power drops to below the micro-processor operating voltage, the lock may be powered down or shut down at a point in its operation where all the processing necessary to keep records in the memory has not been accomplished; a possible result of this power drop is that the electronics will not properly operate when powered up again and the lock thereafter will not function properly.

Accordingly, it is necessary to maintain adequate electrical power to the electronic control portions of the lock including the micro-processor while, at the same time, providing an adequate voltage and current source to the solenoid to ensure that the solenoid operates reliably when signaled to do so.

If the solenoid has the side effect of draining the energy stored in its power source to a low level during its operation, so long as the solenoid has completed its operation and the armature of the solenoid has displaced its full design distance, then the loss of power to the solenoid thereafter is inconsequential when power remains available to operate the micro-processor and the remainder of the lock's electronic controls. If power down occurs at least after the point that operations of the micro-processor are complete, powering down the micro-processor will not disrupt any future operation thereof.

Accordingly, it is essential to the reliable operation of the lock and, particularly, to the operation of the solenoid to have a higher voltage source available to the solenoid in the form of a higher voltage capacitor and a lower voltage capacitor with a substantially larger capacitance providing the electrical power to the electronic controls, each capacitor isolated from the other. The higher voltage charge on the capacitor driving the solenoid provides a larger current source applicable to the solenoid.

It is similarly apparent that a single charging generator must provide the electrical power to both the solenoid capacitor and the electronic controls capacitor at different voltages while, at the same time, minimizing the extent of required manual operation of the stepper motor/generator, thereby not requiring the operator to manually rotate the dial for an extended period of time.

Locks having a solenoid typically require a steady available current to operate the solenoid on demand. The provision of such current either by utility wiring or by battery power effectively destroys many of the benefits of the self-powered lock.

While self-powered locks typically operate at relatively low voltages, the manually operated generators in self-powered locks, such as the Mas-Hamilton Group X-07, are capable of generating open circuit voltages which are substantial enough to charge capacitors to levels substantially higher than that required for the electronic circuitry of the controls of the lock. Large capacitance capacitors such as the type that are used to power the electronics tend to be relatively slow in charging when charged from a manually operated single phase generator.

Where multiple capacitors are charged, particularly to varying levels of charge voltage, the charging cycle and, the amount of generator manual manipulation, therefore, can become significant to charge the largest capacitance capacitor, a serious human factor consideration.

Some stepper motors, which may be used as generators, have more than one generation phase and thus are suitable for charging separate capacitors simultaneously to different voltages.

However, whenever multiple capacitors are charged, in order to ensure that the highest level capacitor obtains a full charge, the charging typically is accomplished at the highest level of any of the capacitors being charged simultaneously.

It is an object of the invention to overcome the shortcomings of prior capacitor charging circuits.

It is another object of the invention to more efficiently charge two dissimilar capacitors simultaneously.

It is another object of the invention to efficiently charge two capacitors with a minimum of generator operation to different voltage levels.

It is still a further object of the invention to use a two-phase generator to charge as efficiently as possible two capacitors to differing predesignated voltage levels.

The shortcomings of the prior art are overcome and the objects of the invention accomplished by the circuit described below.

A two-phase stepper motor is provided with each phase of the stepper motor connected with one of two rectifier bridges. The rectifier bridge outputs are further connected to two capacitors and through a zener diode network to ground. The zener diode network acts both to protect the capacitor with the lowest design voltage level and to divert the charging energy from the higher voltage rated capacitor to charge the lower voltage rated capacitor. The charging level of the higher level voltage capacitor tracks the charge voltage of the lower voltage capacitor in instances wherein the lower voltage capacitor has a significantly larger capacitance and thus takes a significantly longer time to charge.

When the charging level of the electronic control supply capacitor reaches the level that is the maximum rated for the zener diode in parallel therewith, and the solenoid supply capacitor is charged to a voltage equal to the sum of the zener diode voltage ratings in the zener diode network, the output of the generator is shunted to ground through the zener diode to prevent overcharging the capacitors and any consequent damage thereto.

Even manually driven, the stepper motor/generator when rotated at a sufficiently high operating speed can generate an open circuit voltage higher than needed for charging the capacitors. The generated voltage acts to charge each of the capacitors until both are fully charged as limited by the zener diode network.

Each generator phase is connected to its respective capacitor for charging that capacitor. The two output lines from the rectifier bridges further are connected to a pair of zener diodes joined in series such that the zener diodes are connected at dissimilar terminals and the zener diodes are reverse biased by the generating voltage. One phase of the generator is connected to the junction between the two series connector zener diodes.

This network, with some additional elements as will be described more fully later, controls the capacitor charging energy such that one capacitor charges very rapidly and the excess charging energy available then is diverted to be combined with the other generator phase output to charge the larger capacity capacitor, thus, reducing the charging time and manipulation of the generator necessary to bring both capacitors to a full charge.

The remainder of the electronics circuits may be connected to the capacitor charging circuit and therefore derive their operating voltages from either the generator provided voltage or the capacitor voltage charge.

A more complete understanding of the invention may be had by reference to the attached drawings and to the detailed description of the invention which follows.

Fig. 1 is a diagram of the capacitor charging circuit and circuit connections to the electronics which are powered by the capacitors when charged.

Fig. 2 illustrates a schematic of the electronic lock and the relationship of the electronic and mechanical portions thereof.

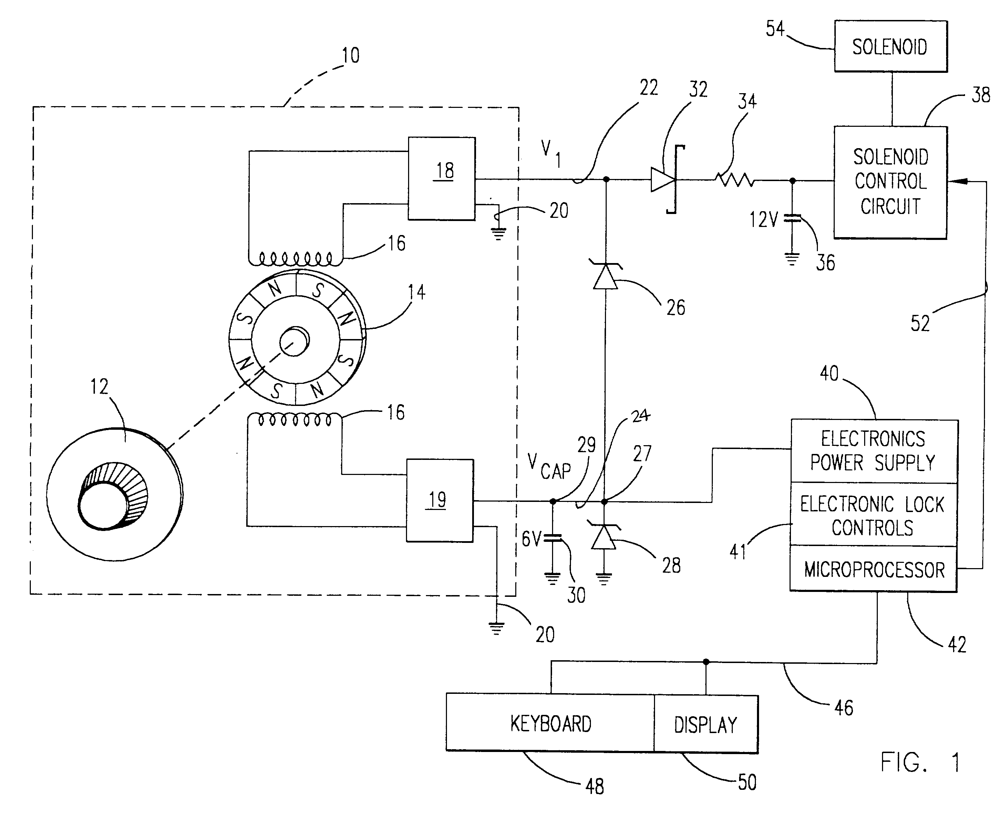

Referring now to Fig. 1, a manually operated generator 10 is shown having a dial 12 for the manual input of rotary motion to the armature or magnet ring 14. The dial 12 is connected to a segmented ring magnet 14 and rotates the segmented ring magnet 14 in conjunction with the dial 12, as it is rotated manually. The generator 10 further comprises coils 16 located adjacent the magnet ring 14, and each coil 16 has two outputs connected to rectifier circuits 18, 19. The rectifier circuits 18, 19 in turn each have two output connections; one a ground connection 20 and the other, a voltage output 22 or 24. Rectifier circuit output 22 or voltage output 22 is in turn connected to the cathode of a zener diode 26. Similarly the rectifier voltage output 24 of rectifier circuit 19 is connected to the cathode of zener diode 28. Zener diodes 26 and 28 are connected in series, and the connection of voltage output line 24 is at the junction between zener diodes 26 and 28. Intermediate the rectifier circuit 19 and the connection to the junction 27 between zener diodes 26 and 28 is a connection 29 to a capacitor 30 which, in turn, is further connected to ground.

Similarly, zener diode 28 is connected to ground. The capacitor 30 attached to voltage output line 24 is preferably a large capacitance capacitor with a voltage rating of, by way of example of, six volts. Capacitor 30 is sized to provide the necessary electrical current to power the electronics of an electronic type combination lock.

Voltage output line 22, carrying voltage V₁ from rectifier circuit 18, is connected to the anode of a Schottky diode 32 with another connection to the cathode of Schottky diode 32 further connected in series to resistor 34, and thereafter to a junction connecting a capacitor 36 and solenoid control circuit 38. Capacitor 36 is similarly grounded.

Capacitor 36 has a smaller capacitance but a higher design voltage limit, necessitated by the need to provide adequate current for a short period of time to the solenoid 54 in order to make the solenoid 54 pick. The capacitance of capacitor 30 is considerably larger but has a lower voltage rating. The lower voltage rating is a result of the need for a lower voltage to supply the electronics power supply 40 of the electronic lock controls 41 including the micro-processor 42, the keyboard 48, display 50 and the signal to the solenoid control circuit 38. Even with the higher voltage rating for capacitor 36, the charging of capacitor 36 can and will occur much more rapidly due to the smaller capacitance thereof. Therefore, whenever dial 12 and ring magnet 14 are rotated, capacitor 36 will charge up to a voltage which will be larger than the voltage on the capacitor 30 and the voltage at the junction intermediate zener diodes 26, 28.

Output 24 of rectifier circuit 19 carries a voltage designated Vcap. At the junction of voltage output 24 and zener diodes 26 and 28 is a further connection 27 to the electronics power supply 40, which powers the electronic lock controls 41, which further includes a micro-processor 42, and provides the control connections and signals necessary for accepting combinations, displaying symbols on a display 50, and for sending control signals to the solenoid control circuit 38.

The acceptance of the operator input by the micro-processor 42 within the electronic lock control 41 is accomplished over line 46 extending between the electronic lock control 41 and keyboard 48. Keyboard 48 typically is mounted on a housing incorporating display 50. A preferred type of keyboard 48 is a keypad incorporating diaphragm or shorting switches for each key position and the display 50 is preferably a liquid crystal type display.

Signals provided by the electronic lock controls 41 and more particularly the micro-processor 42 are conducted by line 52 to the solenoid control circuit 38. The solenoid control circuit 38 in turn is connected to and controls solenoid 54 to condition the mechanical elements of the lock 11 to permit opening lock 11.

The operation of the charging circuit disclosed in the drawings is such that capacitor 36, which by way of example is a 12 volt capacitor, is charged by the output of rectifier circuit 18 on voltage output 22. The effect is that charging of capacitor 36 will be dependent solely upon the output 22 until such time as the charge voltage on capacitor 36 is greater relative to the junction intermediate zener diodes 26 and 28 than the rating of zener diode 26. Simultaneously, capacitor 30 is receiving charging energy on the rectifier circuit output 24. Both capacitors 36 and 30 will charge simultaneously.

This phenomena is the result of the design voltage rating, by way of example six volts, on zener diode 26. Zener diode 26 under these conditions is back biased by the voltage V₁ and the charge voltage on the capacitor 36. As the charge rises on capacitor 36 to a charge voltage exceeding the charge voltage on capacitor 30 by six volts, the rating on zener diode 26, zener diode 26 then will avalanche or breakdown and conduct toward the junction intermediate zener diodes 26 and 28. Because zener diode 28 to this point has not had a voltage applied to it in excess of the six volt rating thereof, it will continue to resist and block any current flow to ground 20. With the generator 10 continuing to rotate and generate electrical energy and voltages in direct current form on outputs 22, 24, the charge energy from V₁ will continue to flow through zener diode 26 to capacitor 30. The voltage and the current flow passed through zener diode 26 is additive to the voltage and current on voltage output 24 from rectifier circuit 19, and thus the charge voltage and energy stored in capacitor 30 will increase more rapidly than when zener diode 26 was not conducting during the initial stage of charging capacitor 36.

As the charge voltage on capacitor 30 rises as a result of this charging, zener diode 26 will act as a variable resistor responsive to the differential between the charge voltage on capacitor 36 and the charge voltage on capacitor 30. As the charge voltage differential is reduced to a value less than the voltage rating of zener diode 26, the zener diode 26 will increase in resistance, diverting more of the generated energy on voltage output 22 to capacitor 36, thus maintaining a voltage differential between capacitors 30, 36 equal to the voltage rating of zener diode 26. This charging differential relationship will continue until such time as the charge voltage on capacitor 30 reaches the design voltage limit of the zener diode 26, for example six volts.

Upon reaching the design limit of capacitor 30, and assuming that the voltage rating on zener diode 28 is a like value, zener diode 28 will become conductive after it has avalanched or broken down and the zener diode 28 will conduct current sufficiently to maintain V₁ at the sum of the voltage ratings of the zener diodes 26, 28. Thus, the energy provided by continued operation of the generator 10 will not overcharge or damage capacitor 30.

Similarly, once the capacitor 30 has reached its design limit of six volts, and capacitor 36 has been charged to its design limit of 12 volts, zener diode 26 will continue to conduct; and with both zener diodes 26, 28 in a conductive state, all of the energy being generated by generator 10 will be conducted to ground through zener diode 28. Therefore, assuming that generator 12 is operated at a speed sufficient to generate a voltage output V₁ in the order of 16 volts open circuit voltage, the capacitors 30, 36 will fully charge to their design limits as controlled by the zener diode 28 or capacitor 30 and the combined design voltage values for zener diodes 26, 28 with regard to capacitor 36.

As can be appreciated, once fully charged, capacitor 30 provides a six volt initial voltage to the electronic power supply 40 and through the electronic power supply 40 to the electronic lock controls 41 which includes micro-processor 42.

The Schottky diode 32 is inserted into the circuit between capacitor 36 and zener diode 26 to prevent the discharge of capacitor 36 when the output voltage of the rectifier circuit 18 falls below the voltage on capacitor 36.

By utilizing the Schottky diode 32 as illustrated, the full 12 volts potential and the full charge current on capacitor 36 remain available for the solenoid control circuit 38 and solenoid 54 operation.

Accordingly, it can be seen that even if capacitor 30 has lost a substantial portion of its charge voltage, down to 4 or 4½ volts for example, but still sufficient to operate the electronics in the later stages of their operation, the full charge on capacitor 36 remains available to pick or drive the solenoid 54 upon command from the micro-processor 42 over line 52.

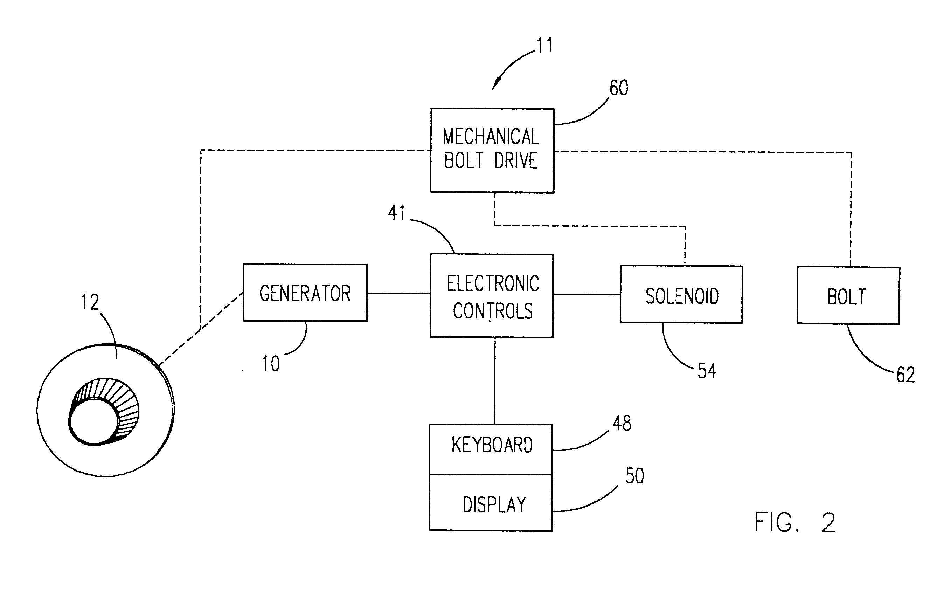

Referring to Fig. 2 which illustrates the lock 11 in schematic form, the dial 12 drives the generator 10 and is connected to the mechanical bolt drive 60. Dashed lines indicate mechanical connections while solid lines represent electrical connections. The bolt drive 10 controls the movement of the bolt 62.

Generator 10 provides electrical power to the elctronic control 41 and the solenoid 54. Solenoid 54 mechanically interfaces with the bolt drive 60.

As described with reference to Fig. 1, the keyboard 48 and display 50 are connected to the electronic lock controls 41 in Fig. 2.

Those skilled in the art of electronic circuit design will readily understand that numerous other electronic elements may be added into this circuit or attached to the circuit for various purposes without effecting the overall operation of the circuit or without removing the altered circuit from the scope of protection provided by the append claims hereto. Further, anyone skilled in the art will recognize that the values used by way of example in describing this circuit may be altered to fit their needs and, accordingly, changes in the values of the respective electronic components will not remove the circuit from the scope of protection granted by the claims attached hereto.

## Claims

1. A capacitor charging system for charging a first capacitor to a first voltage and a second capacitor to a second voltage level, comprising:
a generator having at least two separate generating phases;
a first capacitor connected to a first one of said generating phases;
a second capacitor connected to a second one of said generating phases; and
a voltage limiting electronic component connected to said each of said generating phases in parallel to each of said first and second capacitors;
whereby said voltage limiting components are disposed to limit the voltage applied to each of said capacitors and to maintain a predetermined charge voltage relationship between said capacitors during charging

2. The capacitor charging system of claim 1 wherein said voltage limiting electronic components are zener diodes.

3. The capacitor charging system of claim 2 wherein said zener diodes are further connected in series with each other

4. The capacitor charging system of claim 3 wherein voltage ratings of said zener diodes determine a differential voltage charge level between charge levels of said capacitors.

5. The capacitor charging system of claim 4 wherein said zener diode connected to said first generating phase and connected in parallel to one of said capacitors controls a charge voltage level on one of said capacitors above a charge level of said other capacitor during charging of said capacitors.

6. The capacitor charging system of claim 5 further comprising a first electrical circuit requiring a first voltage level to operate connected to said system intermediate said zener diodes and a second electrical circuit requiring a second higher voltage level to operate connected to said system at a point intermediate said other capacitor and said first generator phase.

7. The capacitor charging system of claim 6 wherein the charging levels of said capacitors are determined by the voltage capacity of said zener diodes and wherein said first capacitor is chargeable to a first voltage equal to said voltage rating of said zener diode connected to said first capacitor and said second capacitor is chargeable to a second voltage equal to said combined voltage ratings of both said zener diodes.

8. The capacitor charging system of any preceding claim wherein the generator is a stepper motor.

9. The capacitor charging system of any of claims 1 to 7, wherein the generator is manually rotateable.

10. A self-powered electronic lock comprising:
a bolt having an extended, locked position and a withdrawn unlocked position;
a cam rotatable for withdrawing said bolt from said locked position to said unlocked position;
a manually operated dial for rotating said cam;
a displaceable bolt lever interconnected to said bolt and displaceable from a non-engaged position to an engaged position engaging said cam for deriving movement of said bolt lever from said cam and transmitting said movement to said bolt;
an electronic control for receiving a combination and accepting or rejecting the validity of said combination;
a solenoid responsive to a signal controlled by said electronic control for further controlling displacement of said bolt lever from said locked position to said unlocked position;
said electronic control powered by a first capacitor charged to a first voltage level;
said solenoid powered by a second capacitor charged to a second voltage level higher than said first voltage level;
said electronic lock further comprising a capacitor charging system comprising:
a generator having at least two separate generating phases;
said first capacitor connected to a first one of said generating phases;
said second capacitor connected to a second one of said generating phases;
a voltage limiting electronic component connected to ground and to each of said generating phases in parallel to each of said first and second capacitors;
whereby said voltage limiting components are disposed to limit the voltage on each of said capacitors and to maintain a predetermined charge voltage relationship between said capacitors during charging.

11. The electronic lock of claim 10 wherein said voltage limiting electronic components are zener diodes.

12. The electronic lock of claim 11 wherein said zener diodes are further connected in series with each other.

13. The electronic lock of claim 12 wherein voltage ratings of said zener diodes determine a differential voltage charge level between the charge levels of said capacitors.

14. The electronic lock of claim 13 wherein said zener diode connected to said first one of said generating phases and connected in parallel to one of said capacitors controls a charge voltage level on one of said capacitors above the charge level of said other capacitor during charging of said capacitors.

15. The electronic lock of claim 14 further comprising a first electrical circuit requiring a first voltage level for operation connected to said charging system intermediate said zener diodes and a second electrical circuit requiring a second higher voltage level for operation connected to said charging system at a point intermediate said other capacitor and said first generator phase.

16. The electronic lock of claim 15 wherein the charging levels of said capacitors are determined by the voltage capacity of said zener diodes and wherein said first capacitor is chargeable to a first voltage equal to said voltage rating of said zener diode connected in parallel to said first capacitor and said second capacitor is chargeable to a second voltage equal to said combined voltage ratings of both said zener diodes.

17. The electronic lock of claim 15 wherein the generator is a stepper motor.

18. The electronic lock of claim 15 wherein the generator is a stepper motor and is manually rotateable.

19. An electronic lock comprising:
a bolt having an extended position and a withdrawn position;
a solenoid for controlling the withdrawal of said bolt;
electronic controls for controlling the lock;
a generator for creating electrical power for operation of said electronic controls and said solenoid;
a first capacitor connected to said generator for storing electrical energy at a first voltage level for operation of said electronic controls;
a second capacitor connected to said generator for storing electrical energy at a second voltage level for operation of said solenoid; and
electrical circuit components connected to said capacitors and to ground for limiting said first and second voltage levels
